# EUROPÄISCHE PATENTSCHRIFT

(11) **EP 0 825 813 B1**
(45) Veröffentlichungstag und Bekanntmachung des Hinweises auf die Patenterteilung: **19.12.2001**
(21) Anmeldenummer: 96913511.0
(22) Anmeldetag: 18.04.1996
(51) Int. Cl.: A21D 15/04

(54) **VERFAHREN ZUR HERSTELLUNG VON VERPACKTE , VORGEGARTE TEIGWAREN**
PROCESS FOR THE PREPARATION OF PACKAGED PRE-COOKED PASTA
PROCEDE DE PREPARATION DE PATES PRECUITES, SOUS EMBALLAGE

(30) Priorität: 09.05.1995 DE 19516874
(43) Veröffentlichungstag der Anmeldung: 04.03.1998
(73) Patentinhaber: Bonroyal-Werk, 51515 Kürten-Neuensaal (DE)
(72) Erfinder: BRUNSBACH, Fritz, D-51688 Wipperfürth (DE)
(74) Vertreter: Werner, Hans-Karsten, Dr.Dipl.-Chem.
(86) Internationale Anmeldenummer: EP9601621
(87) Internationale Veröffentlichungsnummer: WO9635331

(56) Entgegenhaltungen:
- EP-A- 0 602 953
- EP-A- 0 626 137
- FR-A- 1 310 494
- FR-A- 2 502 907
- LU-A- 43 934
- US-A- 4 466 985

## Beschreibung

Die vorliegende Erfindung betrifft verpackte, ungefüllte oder gefüllte, vorgegarte Teigwaren in einer Plastikfolie und das Verfahren zur Herstellung dieser Teigwaren.

Die Vorteile.von italienischen Teigwaren bzw. Nudeln aller Art sind hinreichend bekannt. Sie erfreuen sich ständig zunehmender Beliebtheit, wobei sie längst den Ruf verloren haben, dick zu machen. Sie sind zwar mit bis zu 75 % reich an Kohlenhydraten, zugleich aber mit nur etwa 3 % arm an Fett. Nudeln sättigen nachhaltig, auch wenn sie zum Beispiel mit einer fettarmen Tomatensauce angerichtet werden. Weiter enthalten Nudeln bis zu 15 % pflanzliches Eiweiß, etwa 1 % Mineralstoffe wie Kalium und Calcium, Vitamine der B-Gruppe und Vitamin A. Sie lassen sich schnell und problemlos zubereiten und sind gut bekömmlich. Nur noch selten, mit Ausnahme der schwäbischen Spätzle, werden Teigwaren bzw. Nudeln in der eigenen Küche hergestellt. Längst liefert die Teigwaren-Industrie beste Nudel-Qualitäten in vielen Variationen.

Beim Endverbraucher gefragt sind hierbei länger haltbare, vorzugsweise in Portionsgrößen von 150 bis 500 g verpackte Lebensmittel, die sich schnell und einfach zubereiten lassen, d.h. innerhalb weniger Minuten servierfertig sind.

Im Bereich der Fertiggerichte haben sich zwei Trends durchgesetzt. Zum einen werden vorgegarte Fertiggerichte (z.B. Hühnerfrikassee) in Beuteln angeboten, die in gefriergeeigneter Packung eingesiegelt und tiefgekühlt bis zu etwa 18 Monaten haltbar sind. Gefriergeeignete Verpackungen zeichnen sich durch Kältebeständigkeit, Luft- und Wasserundurchlässigkeit, Reiß- oder Bruchfestigkeit sowie Beständigkeit gegen Fette und Säuren aus. Sie sind notwendig, da anderenfalls die Lebensmittel durch Kälte austrocknen würden und/oder es zur Bildung von Gefrierbrand kommen könnte. Diese Fertigprodukte müssen vor dem Verzehr aufgetaut und dann erhitzt werden.

Zum anderen sind es die sogenannte Teilfertiggerichte (z.B. Reisbeutel), die in normaler, nicht gefriergeeigneter Plastikfolie bei Raumtemperatur mehrere Monate haltbar sind. Sie müssen. jedoch vor dem Verzehr gekocht bzw. gegart werden. Gegebenenfalls kann der Kochvorgang auch im Beutel durchgeführt werden.

Teilfertiggerichte erfordern jedoch einen Zeitaufwand von 10 bis 20 Minuten. Für die Gewährung der Haltbarkeit müssen diese Produkte absolut steril sein. Dazu müssen sie einer Dampf-Sterilisation im Autoklaven unter Druck etwa 20 Minuten lang einer Temperatur von über 112°C ausgesetzt werden. Zur Aufrechterhaltung der Sterilität können Vakuum-Verpackungen eingesetzt werden.

Bekannt sind gefüllte, rohe (nicht vorgegarte) Teigwaren, die sterilisiert und vakuumverpackt eine Haltbarkeit von drei bis sechs Monaten mit Kühlung (T ≤ 10°C) aufweisen.

Weiterhin sind verpackte vorgegarte gefüllte Teigwaren bekannt. Der Garvorgang erfolgt hier jedoch extern, d.h. außerhalb der Verpackung. Sie sind nur im gekühlten Zustand haltbar. Ungekühlt müssen sie rasch verbraucht werden.

Die DE-GM 1 863 980 beschreibt eine sterilisierbare Weichpackung mit Hilfe von heißsiegelfähigen Aluminium-Verbundfolien, wobei die Folien außen mit einer wärmebeständigen, nicht thermoplastischen Kunststoffschicht überzogen sind. Diese Packungen eignen sich zur Aufbewahrung von Nahrungsmitteln, wie zum Beispiel Würsten, Fleischwaren, Gemüsen und Getränken, sowie von Fertiggerichten. Die Nahrungsmittel wie Fleischwaren etc. können jedoch nur verarbeitet werden, wenn sie fertig oder beinahe fertig vorgekocht sind.

Die DE-A 30 18 118 beschreibt eine heißversiegelbare Verpackung für die handelsübliche Sterilisation und gefrierfreie Lagerung von Lebensmitteln aus einer polymeren Laminat-Bahn, bestehend aus drei Schichten. Als Lebensmittel erwähnt sind Zuckersirupe, Ketchup, Fruchtsäfte, Gallerten, Eingemachtes und stark saure Nahrungsmittel sowie Kartoffeln, Tomaten, Getreide, Karotten, Beefstew und grüne Bohnen sowie Sirup und Tomatenpaste.

Die DE-OS 15 86 587 beschreibt ein Verfahren zur Herstellung von Nahrungsmitteln und Verpackungseinheiten hierfür, bestehend aus einem speziell geformten Sack, der beim Eintauchen in kochendes Wasser nicht schrumpft, fett-resistent ist und einen manuell zu öffnenden und wieder zu versiegelnden Verschluß trägt. Hierin lassen sich eine Reihe von Lebensmitteln füllen, unter anderem auch Spaghetti und Tomatensoße. Ein Nachteil dieses Verfahrens ist, daß die Teigwaren sehr weich werden, weil die Flüssigkeitsaufnahme durch die Soße fast unbegrenzt ist und bei der Wiedererwärmung dieser negative Aspekt noch verstärkt wird.

Das DE-GM 76 23 490 beschreibt eine Verpackung für Fertiggerichte wie Gulasch, Hähnchen- oder Putenbrust, Fisch etc., wobei diese verpackten Lebensmittel aus einem Schlauch aus Kunststoff-Folien bestehen, der senkrecht zu seiner Längsausdehnung eine Schweißnaht aufweist. Das Fertiggericht befindet sich in dem zwischen beiden Schweißnähten gebildeten Hohlraum. Erhitzt wird nur auf 80°C.

FR-A-2,502,907 beschreibt ein Verfahren zur Herstellung von festen und vorgegarten Nahrungsmitteln, bei welchem eine rohe Teigware in kochendem angesäuertem Wasser 2 bis 12 Minuten vorgegart, anschließend abgekühlt und eingeölt wird. Das eingeölte Produkt wird dann in einem Behälter unter Vakuum eingesiegelt und eine Stunde lang bei ca. 90°C sterilisiert. Die Feuchtigkeitsaufnahme beträgt maximal 70 %. Vor dem Verzehr muß mindestens 1 bis 2 Minuten nachgegart werden.

Die FR-A 1,310,494 beschreibt ein Verfahren zur Stabilisierung von frischen Teigwaren, bei dem die Teigwaren im Beutel eingesiegelt werden und 3 bis 15 Minuten einer Infrarotbestrahlung bei einer Temperatur von 100 bis 160°C zur Sterilisierung unterzogen werden. Als Beutel werden Folien aus warmhärtbarem, transparentem Spezialkunststoff, nämlich der Marke Rilsan® (Polyamid) verwendet. Diese Folien sind sauerstoffdurchlässig.

EP-A 0 626 137 beschreibt ein Verfahren zur Herstellung einer haltbaren, ungekochten oder teilweise gekochten Teigware, bei welchem zunächst eine frische Pasta hergestellt wird, diese mit Dampf erhitzt und dann in ein Säuerungs- oder Netzmittel oder Mischungen derselben eingetaucht wird. Danach wird getrocknet und nochmals wieder eingetaucht und die teilweise getrocknete Pasta in einem Behälter eingesiegelt und pasteurisiert. Der Feuchtigkeitsgehalt der Teigware beträgt 15 bis 38 %. Die verwendete Folie ist sauerstoffdurchlässig. Das Produkt muß vor dem Verzehr nachgegart werden. Das Verfahren ist nicht geeignet für gefüllte oder mehrlagige Teigwaren.

Die EP-A 0 602 953 beschreibt ein Verfahren, welches eine Vorgarung außerhalb der Folie und den Zusatz einer Säure verlangt, mit welcher der pH-Wert auf 3,5 bis 4,6 abgesenkt wird, um die Haltbarkeit zu verbessern. Erst nach der Säurezugabe wird Öl zugesetzt, um das Verkleben zu vermindern. Erst dieses fertige Produkt wird dann in Polyesterbeutel gefüllt, versiegelt und in einem Tunnel mit gesättigtem Wasserdampf auf 82° Celsius erhitzt. Dieses Produkt war zwar neun Monate lagerfähig, jedoch waren Geschmack, Geruch und Textur unbefriedigend.

Die LU-A-43934 beschreibt ein Verfahren zur Konservierung von trockenem Gemüse und ähnlichen Produkten einschließlich Teigwaren, wobei diese Waren mit einer geeigneten Wassermenge und ggf. Zusatzstoffen eingesiegelt und in einem Autoklaven gegart und anschließend sterilisiert werden. Es findet sich hierin kein Hinweis darauf, dass die Plastiktüten sauerstoffundurchlässig seien. Diese Teigwaren verkleben miteinander, da der Zusatz von Öl fehlt.

Aufgabe der vorliegenden Erfindung ist es, verpackte, ungefüllte oder gefüllte, vorgegarte Teigwaren zur Verfügung zu stellen, deren Portionsgrößen zwischen 150 g und 500 g betragen und die in einer Folie eingesiegelt sind. Sie sollen mindestens 6 Monate ohne Kühlung haltbar sein. Daneben sollen die Teigwaren selbstverständlich wohlschmeckend und gut eßbar, sowie kostengünstig sein. Ferner sollte die Haltbarkeit auf sechs Monate ohne Kühlung erhöht werden. Das Verfahren zur Herstellung dieser Teigwaren sollte dabei einfach und preiswert bleiben.

Diese Aufgabe wird überraschend einfach gelöst durch die Maßnahmen des Anspruchs 1. Bevorzugte Ausführungsformen sind Gegenstand der Ansprüche 2 bis 5. Der Vorteil für den Konsumenten ist Zeitersparnis, da das Blanchieren (kurzes Vorkochen vor dem Einfrieren) entfällt. Auch die beim Kochen von Teigwaren auftretenden Schwierigkeiten bei der Ermittlung des richtigen Garpunkts verbunden mit dem Resultat einer zu weichen, klebrigen Teigware sind nicht mehr gegeben.

Der Konsument erhält bereits vollsändig und perfekt vorgegarte Teigwaren oder mit anderen Worten "pasta al dente", die nur noch im Kochtopf oder in der Mikrowelle erwärmt zu werden brauchen.

Als heißsiegelbare, für Lebensmittel zugelassene Verpackungsfolien haben sich Polyethylen- und Polypropylen-Folien bewährt, die zusätzlich noch eine Sperrschicht aus EVOH (Polyesterfolie, 12 mm) mit Lackkaschierung aufweisen und Dicken von 20 bis 200 mm, vorzugsweise 50 bis 150 mm besitzen.

Weitere Vorteile, die durch Verwendung einer Verbundfolie entstehen, sind neben Zeitersparnis durch Wegfall des Auftauvorganges auch der Wegfall der Gefrierbrandgefahr (verursacht durch eingerissene Verpackung).

Das erfindungsgemäße Verfahren zur Herstellung der Teigwaren läßt sich auf die verschiedensten Nudelsorten anwenden, zum Beispiel Cappeletti ("kleine Hütchen"), Ravioli, Tortellini, Fusilli, Nidini (= Nudelnester), Penne, Spirelli oder Fusilli (Spiralen), Torteloni, Rigatoni, Maultaschen, Cannelloni ("große Röhren"), Agnolotti (große Ravioli), Fettuccine (breite Bandnudeln), Maccaroni und Farfalle. Als Füllungen sind zum Beispiel Fleisch-, Gemüse-, Käse- und Fisch-Füllungen zu nennen.

Zur Herstellung der Teigwaren gemäß Anspruch 1 werden die rohen Teigwaren in einer Plastikfolie vorzugsweise einer Stufenkochung nach dem Berieselungsverfahren unterzogen. Dazu werden die Teigwaren, gefüllt oder ungefüllt, zusammen mit der notwendigen Wasser- und Pflanzenölmenge flachgedrückt und eingesiegelt. Dadurch werden weitgehend Luft und Sauerstoff aus der Packung entfernt. Dabei ist darauf zu achten, daß keine Überfüllung mit Wasser/Pflanzenöl stattfindet, da anderenfalls das Einsiegeln nicht mehr optimal durchgeführt werden kann. Die benötigte Wasser- und Pflanzenölmenge für eine Packung wird so gewählt, daß sie einerseits für eine gewünschte Quellung ausreicht, andererseits die vollständige Wasseraufnahme durch das Produkt gewährleistet ist. Pflanzenöl und Wasser werden miteinander emulgiert zusammengegeben, um eine gleichmäßige Dosierung zu erreichen. Die versiegelten Packungen werden vorzugsweise in Kaskadenform gestapelt in den Autoklaven eingebracht. Nach dem Verschließen der Autoklaven wird die Temperatur im Wasserkessel auf 80 bis 90°C gebracht und die Teigwaren-Packungen im Autoklaven mittels Dampf-Injektion nach dem Berieseiungsverfahren mit gespanntem Wasserdampf besprüht. Nach etwa fünf Minuten hat die Wasser/Pflanzenöl/Emulsion in der Packung die Umgebungstemperatur von ca. 90°C erreicht, so daß sich die Packung aufbläht. Das Pflanzenöl bewirkt, daß die einzelnen Teigwarenstücke beim Garvorgang nicht miteinander verkleben. Bei einer Temperatur von etwa 90°C setzt der Kochvorgang in der Packung im geschlossenen System ein. Gleichzeitig beginnt die Quellung und Wasseraufnahme der Teigware. Vorzugsweise werden die Packungen im etwas aufgeblähten Zustand einmal, vorzugsweise vier- bis fünfmal um 180° gedreht. Die Anordnung der einzelnen Packungen in Kaskadenform bewirkt eine gleichmäßige Erwärmung und Garung. Der Garvorgang ist nach 10 bis 15 Minuten beendet, wobei im Autoklaven ein Druck von 0,8 bis 2,0 bar entsteht. Die Endtemperatur beträgt mindestens 112°C, damit eine ausreichende Sterilisation erfolgt. Diese ist meist nach 10 bis 15 Minuten beendet, wobei F-Werte (= Sterilisationswert) zwischen 1,5 und 2,5, vorzugsweise 1,9 erreicht werden.

Ein Vorteil des erfindungsgemäßen Verfahrens ist darin zu sehen, daß die Maillard-Reaktion unterdrückt werden kann, die zu einer Braunverfärbung der Teigwaren führt.

Nachfolgend wird die Erfindung durch Beispiele näher erläutert.

### Beispiel 1

Herstellung einer verpackten, ungefüllten, vorgegarten Teigware bezogen auf 250 g Teigware:
250 g ungefüllte, rohe Teigwaren werden zusammen mit einer frisch zubereiteten Emulsion von 345 ml Wasser und 15 ml Pflanzenöl in eine 100 mm dicke Verbundfolie mit Sauerstoffsperre (PP-EVOH-PP) eingefüllt. Die Packung wird flachgedrückt und anschließend eingesiegelt. Die abgefüllten und eingesiegelten Packungen werden in Kaskadenform gestapelt und in einen Berieselungsautoklaven eingebracht. Nach dem Verschließen wird durch Einleitung von Dampf stufenförmig zunächst bis 90°C und dann auf 115°C erwärmt, wobei ein Überdruck von ca. 2 bar entsteht. Nach ca. 20 Minuten sind der Garvorgang sowie die Dampf-Sterilisation beendet. Es wird auf 15°C abgekühlt und die Packungen werden aus dem Autoklaven herausgenommen. Die Ware ist bei Raumtemperatur sechs Monate haltbar.

### Beispiel 2

Herstellung einer verpackten, gefüllten Teigware (zum Beispiel mit Fleischfüllung) bezogen auf 250 g Teigware:
250 g gefüllte, rohe Teigwaren werden zusammen mit einer Emulsion von 250 ml Wasser und 10 ml Pflanzenöl in eine 100 mm dicke Verbundfolie mit Sauerstoffsperre (PP-EVOH-PP) eingefüllt und flachgedrückt. Nach dem Einsiegeln wird wie in Beispiel 1 gegart und sterilisiert. Die Ware ist bei Raumtemperatur sechs Monate haltbar.

## Patentansprüche

1. Verfahren zur Herstellung von verpackten, ungefüllten oder gefüllten, vorgegarten Teigwaren in Portionsgrößen zwischen 150 g und 500 g, **dadurch gekennzeichnet, dass** die rohen Teigwaren in eine mindestens bis 125°C hitzebeständige, sauerstoffundurchlässige Verbundfolie, zusammen mit der notwendigen Wasser- und Pflanzenölmenge eingesiegelt und danach unter Druck gegart und sterilisiert werden, wobei das Wasser und Pflanzenöl miteinander emulgiert, zusammen eingegeben werden und die Wasser- und Ölmenge so gewählt sind, dass sie einerseits für die gewünschte Quellung ausreichen und andererseits die vollständige Wasseraufnahme durch das Produkt gewährleistet ist.

2. Verfahren gemäß Anspruch 1, **dadurch gekennzeichnet, dass** die rohen Teigwaren zusammen mit der zudosierten Flüssigkeitsmenge flachgedrückt und dann eingesiegelt werden.

3. Verfahren gemäß einem der Ansprüche 1 oder 2, **dadurch gekennzeichnet, dass** die abgefüllten und eingesiegelten Portionen in einem Autoklaven auf über 112°C erhitzt und anschließend auf unter 25°C abgekühlt werden.

4. Verfahren gemäß einem der Ansprüche 1 bis 3, **dadurch gekennzeichnet, dass** die Portionen nach einer Erhitzung von über 80°C im etwas aufgeblähten Zustand mindestens einmal um 180° gedreht werden.

5. Verfahren gemäß Anspruch 4, **dadurch gekennzeichnet, dass** die Portionen 4 bis 5 mal um 180° gedreht werden.

## Claims

1. A method for the preparation of packaged, unfilled or filled, precooked pasta foods in portions of between 150 g and 500 g, **characterized in that** the uncooked pasta are sealed within an oxygen-impermeable composite sheet which is heat-resistant up to at least 125°C together with the necessary amount of water and vegetable oil, followed by cooking and sterilizing under pressure, wherein the water and vegetable oil are added together in a mutually emulsified condition and the quantities of water and oil are selected, on the one hand, to be sufficient for the desired swelling and, on the other hand, to ensure complete uptake of the water by the product.

2. The method according to claim 1, **characterized in that** the uncooked pasta, together with the metered amount of liquid, are pressed flat and then sealed.

3. The method according to any of claims 1 or 2, **characterized in that** the filled-in and sealed portions are heated at above 112 °C in an autoclave followed by cooling down to below 25 °C.

4. The method according to any of claims 1 to 3, **characterized in that** the portions, after being heated at above 80 °C and while being in a slightly expanded condition, are rotated by 180° at least once.

5. The method according to claim 4, **characterized in that** the portions are rotated by 180° four to five times.

## Revendications

1. Procédé de fabrication de pâtes emballées, farcies ou non farcies, précuites en portions de 150 g à 500 g, **caractérisé en ce que** les pâtes crues sont insérées et scellées dans un film d'enrobage résistant à la chaleur jusqu'à 125 °C au moins et étanche à l'oxygène en même temps que la quantité d'eau et d'huile végétale nécessaire, sont ensuite cuites sous pression et stérilisées, l'eau et l'huile végétale étant émulsionnées l'une avec l'autre, introduites en même temps et les quantités d'eau et d'huile étant choisies de façon à permettre d'une part le gonflement souhaité et d'autre part à garantir l'absorption complète de l'eau par le produit.

2. Procédé selon la revendication 1, **caractérisé en ce que** les pâtes crues sont pressées à plat avec la quantité de liquide dosée et ajoutée et sont ensuite insérées et scellées.

3. Procédé selon la revendication 1 ou 2, **caractérisé en ce que** les portions remplies et scellées sont chauffées dans un autoclave à plus de 112 °C et refroidies ensuite à moins de 25 °C.

4. Procédé selon l'une quelconque des revendications 1 à 3, **caractérisé en ce que**, après avoir été chauffées à plus de 80 °C, les portions sont tournées au moins une fois à 180 ° quand elles ont un peu gonflé.

5. Procédé selon la revendication 4, **caractérisé en ce que** les portions sont tournées 4 à 5 fois à 180 °.
